(19) **Europäisches Patentamt**
**European Patent Office**
**Office européen des brevets**

(11) **EP 3 090 519 B1**

(12) **EUROPEAN PATENT SPECIFICATION**

(45) Date of publication and mention
of the grant of the patent:
**10.10.2018 Bulletin 2018/41**

(51) Int Cl.:
***H04L 25/02*** (2006.01)     ***H04L 25/03*** (2006.01)
***H04B 7/01*** (2006.01)     ***H04L 27/26*** (2006.01)

(21) Application number: **15701940.7**

(22) Date of filing: **05.01.2015**

(86) International application number:
**PCT/EP2015/050068**

(87) International publication number:
**WO 2015/101672 (09.07.2015 Gazette 2015/27)**

(54) **METHODS AND DEVICES FOR DOPPLER SHIFT COMPENSATION IN A MOBILE COMMUNICATION SYSTEM**

VERFAHREN UND VORRICHTUNGEN ZUR DOPPLERVERSCHIEBUNGSKOMPENSATION IN EINEM MOBILKOMMUNIKATIONSSYSTEM

PROCÉDÉS ET DISPOSITIFS DESTINÉS À LA COMPENSATION DE DÉCALAGE DOPPLER DANS UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.12.2013 EP 13199807**
**30.12.2013 US 201361921609 P**

(43) Date of publication of application:
**09.11.2016 Bulletin 2016/45**

(73) Proprietors:
• **Universität des Saarlandes**
**66123 Saarbrücken (DE)**
• **Max-Planck-Gesellschaft zur Förderung der Wissenschaften e.V.**
**80539 München (DE)**

(72) Inventors:
• **HERFET, Thorsten**
**90592 Schwarzenbruck (DE)**
• **ELDAROV, Nasimi**
**66123 Saarbrücken (DE)**

(74) Representative: **Bach, Alexander**
**Mitscherlich PartmbB**
**Patent- und Rechtsanwälte**
**Sonnenstraße 33**
**80331 München (DE)**

(56) References cited:
**WO-A1-98/34357**

• **HONGMEI WANG ET AL: "A Low-Complexity ICI Cancellation Scheme in Frequency Domain for OFDM in Time-varying Multipath Channels", PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE, vol. 2, 11 September 2005 (2005-09-11), pages 1234-1237, XP010926635, DOI: 10.1109/PIMRC.2005.1651638 ISBN: 978-978-38007-2-4 cited in the application**
• **TOMASZ HRYCAK ET AL: "Low Complexity Equalization for Doubly Selective Channels Modeled by a Basis Expansion", IEEE TRANSACTIONS ON SIGNAL PROCESSING, vol. 58, no. 11, 1 November 2010 (2010-11-01), pages 5706-5719, XP055173174, ISSN: 1053-587X, DOI: 10.1109/TSP.2010.2063426 cited in the application**
• **WEICHANG LI ET AL: "Estimation of Rapidly Time-Varying Sparse Channels", IEEE JOURNAL OF OCEANIC ENGINEERING, IEEE SERVICE CENTER, PISCATAWAY, NJ, US, vol. 32, no. 4, 1 October 2007 (2007-10-01), pages 927-939, XP011203625, ISSN: 0364-9059**

**(Cont. next page)**

- YANG LIU ET AL: "Estimation of time-varying frequency-selective channels using a matching pursuit technique", 2003 IEEE WIRELESS COMMUNICATIONS AND NETWORKING CONFERENCE RECORD : 16 - 20 MARCH 2003, NEW ORLEANS, LOUISIANA, USA, IEEE OPERATIONS CENTER, PISCATAWAY, NJ, vol. 2, 16 March 2003 (2003-03-16), pages 941-946, XP010639894, DOI: 10.1109/WCNC.2003.1200498 ISBN: 978-0-7803-7700-4
- Gerald Matz ET AL: "Fundamentals of Time-Varying Communication Channels" In: "Wireless Communications Over Rapidly Time-Varying Channels", 1 January 2011 (2011-01-01), Elsevier, XP055173375, ISBN: 978-0-12-374483-8 pages 1-63, DOI: 10.1016/B978-0-12-374483-8.00001-7, paragraph [1.2.3] paragraph [1.3.1] paragraph [1.3.4] paragraph [1.4.1]
- ELDAROV NASIMI ET AL: "FFT-based equalizer with Doppler compensation for OFDM systems in time-variant multipath channels", 2014 IEEE INTERNATIONAL CONFERENCE ON CONSUMER ELECTRONICS (ICCE), IEEE, 10 January 2014 (2014-01-10), pages 33-36, XP032581880, ISSN: 2158-3994, DOI: 10.1109/ICCE.2014.6775897 [retrieved on 2014-03-19]
- SEAN MASON ET AL: "An OFDM Design for Underwater Acoustic Channels with Doppler Spread", DIGITAL SIGNAL PROCESSING WORKSHOP AND 5TH IEEE SIGNAL PROCESSING EDUCATION WORKSHOP, 2009. DSP/SPE 2009. IEEE 13TH, IEEE, PISCATAWAY, NJ, USA, 4 January 2009 (2009-01-04), pages 138-143, XP031425831, ISBN: 978-1-4244-3677-4
- MA ZIJI ET AL: "Low-complexity channel estimation for ISDB-T over doubly-selective fading channels", 2013 INTERNATIONAL SYMPOSIUM ON INTELLIGENT SIGNAL PROCESSING AND COMMUNICATION SYSTEMS, IEEE, 12 November 2013 (2013-11-12), pages 114-118, XP032541931, DOI: 10.1109/ISPACS.2013.6704531 [retrieved on 2014-01-06]

**Description**

INTRODUCTION

In the field of wireless communications, OFDM has received much recent attention because of its high spectral efficiency, simple equalization, low complexity FFT based implementation, among other aspects. Therefore, many systems e.g., Digital Video Broadcasting (DVB), Digital Audio Broadcasting (DAB), Long Term Evolution (LTE), Worldwide Interoperability for Microwave Access (WiMAX) etc. are based on OFDM. However, there exist obstacles to high mobility in such systems, as OFDM is very sensitive to Doppler shift, where subcarriers are shifted causing an orthogonality loss in the receiver. This phenomenon is described in the literature as intercarrier interference (ICI). For example, in LTE, in the Doppler shift scenario, the high performance can be supported at speeds between 15 to 120 km/h depending on the frequency band and the direction of the movement. Although OFDM can cope with inter symbol interference (ISI) with the help of a cyclic prefix (CP) this becomes inefficient in the presence of the ICI.

PRIOR ART

The known methods to cope with ICI, are all similar in nature. In general, these methods have two parts. The first part is the estimation of the channel state information and the second is the inversion of the channel matrix and equalization of the symbols. Among these related works, A. Nakamura et al. (A. Nakamura and M. Itami, Zero-forcing ICI canceller using iterative detection for mobile reception of OFDM,ICCE 2014, 2014,153-154) proposed a zero-forcing ICI canceller which reduces the complexity of channel matrix inversion to $O(N^3)$ by skipping some non-diagonal elements. However this approach is still very complex. Besides them, Y.H. Zhang et al. proposed an optimization problem which can cancel ICI recursively (Y.H. Zhang, W.-S. Lu, T.A. Gulliver, A Successive Intercarrier Interference Reduction Algorithm for OFDM Systems,IEEE International Conference on Communications, ICC 2007., 2007, 2936-2941). Apart from deriving the channel matrix, the matrix can be inverted with a complexity of $O(N^3)$ and parameters updated recursively which makes it quite hard for systems with a high FFT size. Another ICI cancellation algorithm has been proposed as a partial minimum mean square error estimation (MMSE) having a complexity varying between $O(N^2)$ and $O(N^3)$ depending on the parameters apart from the channel estimation [W. Hongmei, C. Xiang, Z. Shidong and Y. Yan, A low-complexity ICI cancellation scheme in frequency domain for OFDM in time-varying multipath channels, PIMRC 2005., 2005, 1234-1237 Vol. 2]. Both decrease the complexity by sacrificing the accuracy. Recently, T. Hrycak et al. proposed a low-complexity ICI cancellation algorithm based on basis expansion model (BEM) coefficients (T. Hrycak, S. Das, G. Matz and H.G. Feichtinger, Low Complexity Equalization for Doubly Selective Channels Modeled by a Basis Expansion, IEEE Transactions on Signal Processing, 2010). However, the accuracy of BEM model is not satisfactory due to the modeling error, which decreases the final performance of the ICI cancellation.

MA ZIJI ET AL: "Low-complexity channel estimation for ISDB-T over doubly-selective fading channels", 2013 INTERNATIONAL SYMPOSIUM ON INTELLIGENT SIGNAL PROCESSING AND COMMUNICATION SYSTEMS, IEEE, 12 November 2013 (2013-11-12), pages 114-118 discloses a scheme of channel estimation by using modified orthogonal matching pursuit (MOMP) that can reduce the computational complexity as well as keep accurate estimation performance, comparing with the conventional OMP scheme. The computer simulation demonstrates its effect on channel estimation for ISDB-T system.

Existing solutions are either very complex or inaccurate and therefore inefficient in practice.

It is therefore an object of the invention to compensate Doppler shifts in mobile telecommunication signals efficiently and with greater accuracy.

BRIEF SUMMARY OF THE INVENTION

This object is achieved by a method and a receiving device for compensating Doppler shifts according to the independent claims. Advantageous embodiments are defined in the dependent claims.

Other references to embodiments are to be undestood as examples useful for understanding the invention. According to an aspect of the invention, a method for compensating Doppler shifts comprises the steps of receiving a signal ($y$), transforming the signal in order to compensate a Doppler shift ($n_p$) of at least one propagation path ($p$) of the signal ($y$) and outputting the compensated signal.

According to another aspect of the inventino, the signal may be transformed based on a model of the Doppler shift ($v_p$) of at least one propagation path (p) of the signal (y). The Doppler ($v_p$) shift may be modeled to be constant for the duration of at least one symbol. Where the method is used in the context of MISO transmission, the Doppler ($v_p$) shift may be modeled to be constant for the duration of two symbols.

The step of transforming may comprise applying a Fast Fourier Transform (FFT) to the signal. The signal may be an OFDM signal.

The Doppler shift may be compensated based on an inverted channel matrix of the communication system. The channel matrix may include a representation of the Doppler shift ($n_p$) of the at least one propagation path ($p$) of the signal ($y$). The channel matrix may be estimated from the received signal. The channel matrix may be estimated using a matching pursuit (MP) algorithm. Channel coefficients may be determined using least squares (LS) minimization. The channel matrix may further include a representation of at least one of the attenuation, phase shift and time delay of the propagation path.

A stopping criterion for the matching pursuit algorithm may take a distance between channel coefficients for different numbers of paths into account. A stopping criterion for the matching pursuit algorithm may further take a signal-to-noise-ratio (SNR) into account.

BRIEF DESCRIPTION OF THE FIGURES

These and other aspects and advantages of the present invention will become more apparent when considering the following detailed description of embodiments of the invention, in connection with the drawing in which

Fig. 1    shows a flow chart of a method for compensating Doppler shifts in an OFDM system according to an embodiment of the invention.

Fig. 2    shows a flow chart of a method for estimating a channel matrix according to an embodiment of the invention.

Fig. 3    is an illustration of a search for a maximum projection matching the target signal.

Fig. 4    shows the performance of the Doppler compensation in comparison to the 1-tap frequency domain equalizer, BEM based equalizer (which is one of the state-of-art methods) and that without Doppler shift compensation case.

Fig. 5    shows the FEC threshold with red line after which BER (Bit Error Ratio) becomes zero in case FEC is activated.

Fig. 6    introduces the adaptive stopping criterion which can reduce the computation after FEC threshold similar to the adaptive dictionary.

Fig. 7    shows a schematic MISO transmission and reception system.

Fig. 8    shows MISO scattering pilots according to an embodiment of the invention.

Fig. 9    shows a comparison of different channel estimation algorithms according to different embodiments of the invention.

Fig. 10    shows a comparison between the proposed and conventional MISO.

Fig. 11    shows a comparison between SISO and MISO.

DETAILED DESCRIPTION

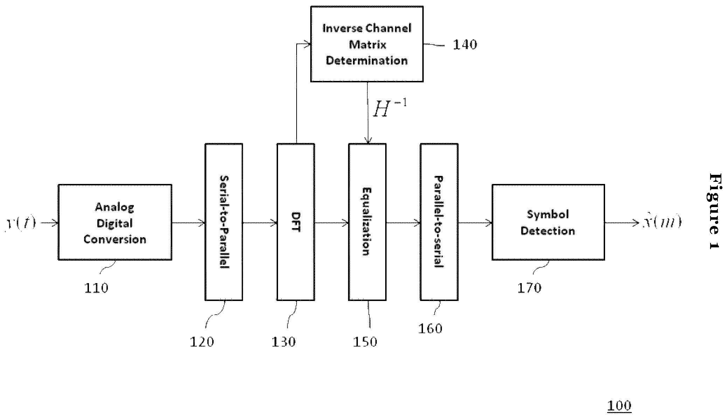

Figure 1 shows a flow chart of a method for compensating Doppler shifts in an OFDM system according to an embodiment of the invention.

In step 110, after reception, the received signal is sampled and subsequently converted from serial to parallel (step 120) and entered into the DFT block, where it is processed in step130.

The mathematical description of the FFT for $l = 0, ... N - 1$ can be written as

$$Y(l) = \sum_{k=0}^{N-1} y(k) \exp\left(-j2\pi \frac{l \cdot k}{N}\right) \qquad (1)$$

In step 140, the inverse of a channel matrix $H$ is calculated and used in step 150 to equalize the received signal In step 160, the signal is converted from parallel to serial and input into a symbol detection block in step 170, which outputs the received symbols.

**[0016]** , A linear time-variant (LTV) multipath propagation model is used as the channel model. It can also be called a double selective channel where both time and Doppler shifts occur due to several reasons e.g., the mobility of either the transmitter or receiver, frequency offsets, oscillator drifts, multipath propagation, etc. Considering that OFDM is more sensitive to Doppler shifts than conventional frequency division systems, there is a need to compensate these effects for OFDM to achieve a high mobility.

In real wireless transmission scenarios, the transmitted signal will be faded, time delayed, phase and Doppler shifted. Specifically, Doppler shifts occur when at least one of the objects is moving in mobile environments.

According to the invention, the Doppler shift is considered as a constant within the given symbol duration. In other words, the Doppler shift in the beginning of the symbol are assumed to be equal or at least to be very close to the Doppler shift at the end of the symbol. The second assumption is the narrowband OFDM case where bandwidth $B$ is very small in comparison to the carrier frequency $f_c$, $B \ll f_c$. This assumption does not degrade the accuracy and ensures that all frequencies are close to the carrier frequency. According to the invention, these assumptions allow to define the Doppler shift model for the $p$-th path by

$$v_p = v \cdot \frac{f_c}{c} \cdot \cos \varphi_p, \qquad (2)$$

where $v$ is the speed of the object, $\varphi_p$ is the angle of arrival, $f_c$ is the carrier frequency and $c$ is the speed of light. In other words, the definition of the Doppler shift is independent of time and frequency and allows to compensate Doppler shifts efficiently with low complexity.

As a mathematical model of LTV, the channel transfer function can be denoted with $h(\tau,t)$, the number of propagation paths with $P$, and input signal with x($t$). It is assumed that the guard interval $T_{GI}$ is long enough for the maximum delay in the channel. The impulse response can be formulated as follows

$$h(\tau,t) = \sum_{p=0}^{P-1} h_p e^{j2\pi v_p t} \delta(\tau - \tau_p) \qquad (3)$$

where attenuation, time delay and Doppler shift are denoted with $h_p$, $\tau_p$ and $v_p$ for p-th path. The received signal $y(t)$ will be a circular convolution of the transmitted $x(t)$ signal and impulse response $h(\tau,t)$

$$y(t) = h(\tau,t) \otimes x(t) + w(t) \qquad (4)$$

where $\otimes$ denotes circular convolution and $w(t)$ is a noise in the channel which is modeled as additive white Gaussian noise (AWGN) but will be omitted here for simplification.

As the received signal $y(t)$ enters into the FFT block, the received signal is transformed into the frequency domain. Considering that the circular convolution becomes a multiplication, the received signal can be written as

$$Y(f) = \mathcal{F}\big(h(t)\big)X(f) \qquad (5)$$

where $\mathcal{F}\big(h(t)\big)$ denotes the Fourier transform of $h(t)$. When equation (3) is written in (5) one obtains

$$Y(f) = \mathcal{F}\left(\sum_{p=0}^{P-1} h_p e^{j2\pi v_p t} \delta(\tau - \tau_p)\right)X(f) \qquad (6)$$

If the Doppler component $e^{j2\pi v_p t}$ is denoted with $d_p(t)$ and rewritten inside (4), the received signal $Y(f)$ will be simplified as follows

$$Y(f) = \mathcal{F}\left(\sum_{p=0}^{P-1} h_p d_p(t)\, \delta\big(\tau - \tau_p\big)\right) X(f) \qquad (7)$$

By the Fourier transform, $\delta(\tau - \tau_p)$ will be converted to $e^{-j2\pi f v_p}$, $\mathcal{F}\big(d_p(t)\big)$ to $D_p(f)$ and the multiplication becomes a circular convolution as a result

$$Y(f) = \sum_{p=0}^{P-1} h_p \big(D_p(f) \otimes e^{-j2\pi f \tau_p}\big) X(f) \qquad (8)$$

For further simplifications, $h_p e^{-j2\pi f \tau_p}$ is denoted with $H_p(f)$ and rewritten as follows

$$Y(f) = \sum_{p=0}^{P-1} \big(D_p(f) \otimes H_p(f)\big) X(f) \qquad (9)$$

Here, for every path the circular convolution can be written as a multiplication of the circulant Doppler matrix and the diagonal delay matrix $D_p(f) \otimes H_p(f) = D_{cp} \cdot H_p$. And finally, by denoting $\sum_{p=0}^{P-1} D_{cp} \cdot H_p$ with $H$ in a matrix form (9) can be rewritten as follows

$$Y = H \cdot X \qquad (10)$$

DOPPLER SHIFT COMPENSATION

In order to compensate Doppler shifts, one has to find $H^{-1}$ since the main task is to estimate X signal with a linear equalization as $\hat{X} = H^{-1} \cdot Y$.

According to an embodiment of the invention, the channel transfer function for the time-variant channel can be inverted in the frequency domain based on a FFT, in just $O(N \log N)$ operations in case the assumptions made in the previous section hold.

According to equation (9), the channel response in the frequency domain can be written as

$$H(f) = \sum_{p=0}^{P-1} D_{cp} \cdot H_p = \sum_{p=0}^{P-1} H_{cp} \qquad (11)$$

The matrix $H_{cp}$ can be written as

$$H_{cp} = \begin{pmatrix} H_{p0} & H_{p(N-1)} & \cdots & H_{p1} \\ H_{p1} & H_{p0} & & \\ \vdots & & \ddots & \vdots \\ H_{p(N-1)} & & \cdots & H_{p0} \end{pmatrix} \qquad (12)$$

The above matrix is a circulant matrix, and it was proven that this kind of matrices can be inverted based on the FFT with just $O(N \log N)$ operations (P. Feinsilver, Circulants, inversion of circulants, and some related matrix algebras, Linear Algebra and Appl., 56, 29-43, 1984 and T. Hrycak, S. Das, G. Matz and H.G. Feichtinger, Low Complexity Equalization for Doubly Selective Channels Modeled by a Basis Expansion, IEEE Transactions on Signal Processing, 2010). Hence, complex circulant matrices can be diagonalized in terms of a Fourier matrix where $N$ permutation matrix can be denoted with $\Pi(= \Pi_N)$ and for the elements $\gamma = [H_{p0},...,H_{p(N-1)}]$ the circulant matrix $H_{cp}$ can be written as a polynomial relationship of $P_\gamma(\Pi)$ as follows

$$P_\gamma(z) = \sum_{k=0}^{N-1} H_{pk} z^k \qquad (13)$$

If the Fourier transformation's primitive $n$-th root of unity is denoted as $\omega := e^{\frac{2\pi j}{N}}$, the diagonal matrix $\Omega(= \Omega_N)$ can be formulated as

$$\Omega = diag(1, \omega, \omega^2, ..., \omega^{N-1}) \qquad (14)$$

After constructing the Fourier matrix $F(= F_N)$ and its Hermitian adjoint $F^*$ based on $\omega(= \omega_N)$ the characteristic polynomial and $H_{cp}$ can be shown in terms of Fourier representation as

$$H_{cp}(\gamma) = F^* P_\gamma(\Omega) F \qquad (15)$$

The Eigenvalues of $H_{cp}(\gamma)$ are $P_\gamma(\omega^k)$, $k = 0,1, ...,N - 1$, which makes $H_{cp}$ invertible in $O(N \log N)$ operations. In practice, there are several algorithms proposed for this process. Inspired by the sparse linear equations and sparse least squares (LSQR) based algorithm, one may also use the LSQR based algorithm to do the channel equalization.

CHANNEL RESPONSE CONSTRUCTION

According to an embodiment of the invention, a MP algorithm which is greedy in nature and accurate enough for the proposed Doppler compensation can be used to estimate the channel response, if it is not known a priori. One may either implement Basic MP (BMP) or least squares MP (LS-MP) which chooses the most dominant taps based on a dictionary (W. Li and J. C. Preisig, Estimation of Rapidly Time-Varying Sparse Channels, IEEE Journal of Oceanic Engineering, 2007, 32, 4, 927-939).

The channel dictionary $D$ has elements $\phi_j, j = 1,...,M$ where $M = K \cdot L$ for $K$ number of time shifts and $L$ number of Doppler shifts in the dictionary. $S$ denotes the number of the elements which have to be searched in the dictionary. At each iteration, the algorithm matches one of the elements of the dictionary based on the maximum rank-one projection and then subtract it from the residual signal $b_j$.

In total, the algorithm can iterate up to $P$ possible paths until the residual goes to zero. Indexes and coefficients are denoted with $I_p$ and $c_p$.

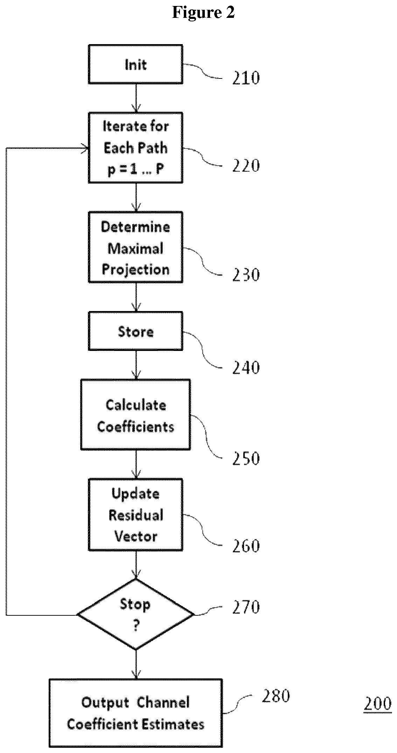

Figure 2 shows a flowchart of a method for estimating a channel response according to an embodiment of the invention.

In step 210, the initial residual signal $b_o$ is set by calculating $b_{0,j} = \phi_j^h Y$ for $j = 1, ..., S$. Also, the $I_p$ vector is added to store selected projection indexes.

In step 220 an iteration is started for each path $p = 1, ..., P$.

In step 230, a $p$-th maximal projection $i_p$ is calculated as

$$i_p = \arg \max_{j=1,...,S, j\notin I_{p-1}} \frac{\left|b_{p-1,j}\right|^2}{\left\|\phi_j\right\|^2} \qquad (16)$$

In step 240, $i_p$ is stored in $I_p = \{I_{p-1}, i_p\}$.

In step 250, the coefficients for the BMP algorithm are calculated as

$$\hat{c}_p = \frac{v_{p-1,i_p}}{\left\| d_{i_p} \right\|^2} \tag{17}$$

However, for the LS-MP algorithm the coefficients are calculated based on LS as follows

$$\hat{c}_{p,ls-mp} = \arg \min_c \left\| y - D_{i,p} c \right\|^2 = \left[ D_{i,p}^h D_{i,p} \right]^{-1} D_{i,p} y \tag{18}$$

where $D_{i,p} \triangleq \left[ \phi_{i_1}, \ldots, \phi_{i_p} \right].$ This is more accurate since the coefficients inside the MP algorithm are calculated using LS.

Phase shifts are calculated implicitly when coefficients are calculated. At the end of the algorithm, one gets $\hat{c}_p$ which can be considered as $h_p$ for the $p$-th path. Time delay $\tau_p$ and Doppler shift $v_p$ are derived from the selected dictionary element $i_p$ at each iteration.

In step 260, the residual vector is updated as

$$b_{p,j} = b_{p-1,j} - \hat{c}_p \phi_j^h \phi_{i_p} \tag{19}$$

In step 270, a stopping criterion is checked. If the threshold of the stopping criterion is denoted as $T_p = \left\| \hat{c}_{p-1} - \hat{c}_p \right\|_2^2$ i.e. a square of the norm of the estimated coefficients difference, the algorithm will stop when $T_p > 1$ or $R_p < \frac{10^{-SNR/200}}{2}.$ On the left side of the condition, $T_p$ will be be bigger than 1 when new entered element modifies all the coefficients that have been decided. In this case, since a new element will not bring any new information it can be stopped.

$$R_p = \frac{\left| b_{p-1,i_p} \right|^2}{\left\| \phi_{i_p} \right\|^2}$$

The maximum projection is

As may be seen on the right side of the condition the stopping criterion is adaptive to SNR which makes the algorithm robust to noise.

If the criterion is met, the channel coefficient estimates are output in step 280. Otherwise, the method branches back to begin a new iteration with another path in step 220.

Running MP algorithms for all elements of the dictionary can be very complex. According to the invention, the complexity may be decreased by a novel heuristic search algorithm taking advantage of the two dimensions in the dictionary which are time delay and Doppler shift, while keeping the same quality.

One can first search for the delay in the dictionary by keeping the Doppler shift constant. After finding the delay, one can search for the Doppler element given the found delay.

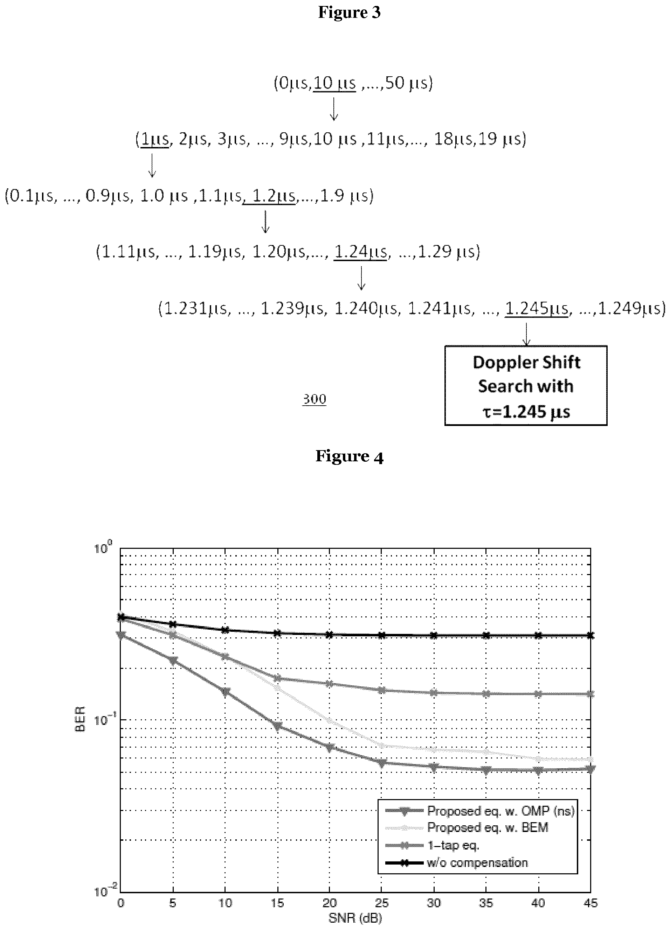

Figure 3 shows an example of a dictionary search according to an embodiment of the invention.

More particularly, the search algorithm may be described as a tree search where the root elements have 10 $\mu s$ precision 6 elements starting from o up to 50 $\mu s$ (0 $\mu s$, ...,50 $\mu s$).

Assuming that the true delay is 1.245 $\mu s$, the algorithm will search for 6 root delay elements and find the delay element $\tau_{10\mu s}$ = 10 $\mu s$ as the root element in the tree. After that, as the next step, the algorithm searches for 9 delay elements below and 9 delay elements above the selected $\tau_{10\mu s}$ = 10 $\mu s$ with a precision of 1 $\mu s$ as 19 branches of the tree in total (1 $\mu s$, 2 $\mu s$, ..., 9 $\mu s$, 10 $\mu s$, 11 $\mu s$, ... , 18 $\mu s$, 19 $\mu s$). The algorithm will choose $\tau_{1\mu s}$ = 1 $\mu s$ in this case. Up to here, the total elements that have to be searched are 24. The next step will be searching the branches of the tree around $\tau_{1\mu s}$ = 1 $\mu s$ to find $\tau_{0.1\mu s}$ which will be $\tau_{0.1\mu s}$ = 1.2 $\mu s$. To find the final delay the algorithm continues in the same way two more times with ten times more precision by searching 18 elements at each step, and find the final 1.245 $\mu s$ delay in just 36 operations. After that, for $\tau$ = 1.245 $\mu s$, one searches for the Doppler shift in the similar way in 20 + 10 operations. For Doppler shift, the branches are restricted to 10 elements instead of 18. In total, S will be 24 + 36 + 20 = 90. If one wants to just stop at precision of 0.1$\mu s$ delay S will reduce to 54. *P* is the maximum number of the iteration in MP algorithm having 32 as maximum. However, in a simulation done by the inventors it did not go over 40.

A dynamic dictionary whose elements are computed and then kept in memory may be used to reduce the computation. In this case the complexity will be $O(N_{pilot} \cdot \log Npilot$ for each element.

COMPUTATIONAL COMPLEXITY

In case *N* is the number of carriers in an OFDM symbol equal to 8K, $N_{pilot}$ is the number of pilots in the OFDM symbol equal to 576, *p* is the index of the path and the maximum number of the iteration in the MP algorithm up to *P*. In general, the dictionary will have $M = K \cdot L$ elements where the first multiplier is the number of possible delays and can be calculated as $K = \frac{\tau_{max}}{1ns} = 56\ \mu s/1\ ns$ where is a division of maximum delay ($\tau_{max} = T_{GI}$) to granularity of delays (1*ns*). The second multiplier is the number of the Doppler elements and can be calculated as $L = \frac{f_{dmax}}{1Hz} =$ 200 *Hz*/1 *Hz* where is a division of maximum Doppler shift (200 *Hz*) to the Doppler intervals (1*Hz*). The complexity of FFT operations is $O(N \log N)$. This part is very important since this was very complex before similar to $O(N^3)$. The complexity of the MP algorithm can be reduced by the search heuristic described in relation to figure 3. Considering that the number of the search steps is S, the complexity of the MP can be written as $O(S \cdot P^2)$ where *S* can be 90 at most.

The Doppler shift compensation according to the invention can be exemplified with a simple 2-path model with angles 0° and 45° and delays 0 and 1.6 $\mu$s. The carrier frequency and speed are 862 MHz and 250 km/h which translates to a Doppler shift of 200 Hz. Here, angles mean that there is only one moving receiver seeing paths under those angles. For simplicity, assume an FFT of size *N* = 4, sampling interval 224 $\mu$s and *X* = [-1,1, -1,1]. First, the IFFT is applied to *X* and one gets *x* = [0,0, -1,0] where *x* enters into the LTV channel. In the LTV channel paths are denoted with $h_1$ and $h_2$ vectors which represent the channel impulse response for every symbol *n* = 1, ..., *N* in the channel and can be written after adding the delays as

$$h_1 = [0,0,0.5,0]$$

$$h_2 = [-0.0000 + 0.0028i, -0.0028 - 0.0028i, 0.5 + 0.0028i, 0.0028 - 0.0028i]$$

After adding delays, Doppler shifts are added to the paths. Doppler shift vectors can be constructed using (7) and written as

$$D_1 = [0.9606 + 0.2778i, 0.8457 + 0.5337i, 0.6641 + 0.7476i, 0.4303 + 0.9027i]$$

$$D_2 = [0.9803 + 0.1977i, 0.9218 + 0.3877i, 0.8270 + 0.5623i, 0.6995 + 0.7147i]$$

Finally, $h_1$ and $h_2$ can be summed and *h* may be written for the channel as

$$h = [-0.0006 + 0.0027i, -0.0015 - 0.0037i, 0.7439 + 0.6572i, 0.0040 - 0.0001i]$$

Where the received signal y enters into the FFT block and one gets *Y* as

$$Y = [-0.7459 - 0.6564i, 0.7482 + 0.6490i, -0.7408 - 0.6636i, 0.7408 + 0.6599i]$$

Finally, the *Y* signal can be equalized by calculating the inverse of *H* which can be written as

$$H = H_1 \otimes \mathcal{F}(D_1) + H_2 \otimes \mathcal{F}(D_2)$$

One may calculate *H* by applying FFT to (14) and write

$$H_1 \otimes \mathcal{F}(D_1) = [0.3321 + 0.3738i, 0.3321 + 0.3738i, 0.3321 + 0.3738i, 0.3321 + 0.3738i]$$

$$H_2 \otimes \mathcal{F}(D_2) = [0.4138 + 0.2826i, 0.4162 + 0.2752i, 0.4088 + 0.2898i, 0.4087 + 0.2861i]$$

The sum of them is

$$H = [0.7459 + 0.6564i, 0.7482 + 0.6490i, 0.7408 + 0.6636i, 0.7408 + 0.6599i]$$

The compensated signal is $\hat{X}$ = *Y./H* = [-1,1, -1,1] which is equal to *X*.

A prototype of the invention was implemented in DVB-T2, a common simulations package (DVB-T2 CSP) as a 32 bit Matlab. The selected guard interval of the system is ⅛, FFT size 8*K*, modulation 16-QAM and PP2 scattered pilots. The synchronization is assumed to be perfect during simulation. The carrier frequency is 862 *MHz* and the sampling time $t_s$ = 7/64 $\mu s$. As a channel we implement typical urban 6-path (TU-6) Rayleigh matlab channel model with a maximum Doppler shift of 200 *Hz*. The maximum normalized Doppler shift will be about 0.21 based on $f_{dn} = f_{dmax}/f_{sc}$ where $f_{sc}$ is the subcarrier spacing equals to 977 *Hz*. In this scenario the symbol duration is 896 $\mu s$ which can make the compensation very sensitive in time-variant channels to short coherence time. Here, it may be seen that the Doppler shift is nearly constant over one symbol duration.

Figure 4 shows the performance of the Doppler compensation in comparison to the 1-tap frequency domain equalizer, BEM (Basis Expansion Model) based equalizer (which is one of the state-of-art methods) and that without Doppler shift compensation case. The OMP (Orthogonal Matching Pursuit) outperforms all of them for all the SNRs. In other words, in comparison to 1- tap equalizer, it considers ICI explicitly which leads to a substantial improvement. In comparison to BEM model based scheme, it provides more accurate channel matrix which resulted with better compensation. It is important to note that OMP based equalizer is better especially for low SNR which makes it preferable.

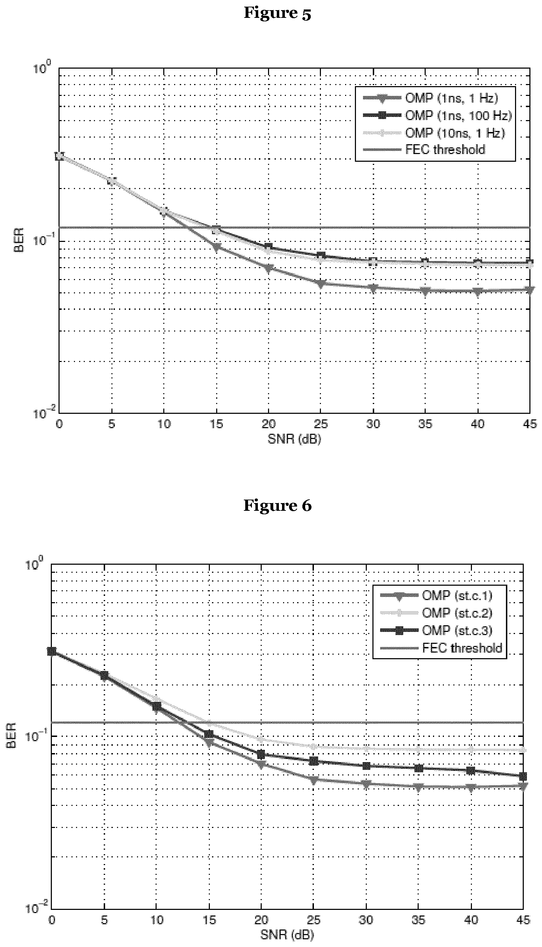

Figure 5 shows the FEC (Forward Error Correction) threshold with red line after which BER becomes zero in case FEC is activated. The adaptive dictionary can reduce the power knowing that FEC will correct all bit errors starting from that FEC threshold. Hence, low precision dictionary can be used which requires less computation and BER which can be corrected by FEC. By using the adaptive dictionary, the computation can be reduced up to 45%. Here, FEC is concatenated LDPC and BCH codes in DVB-T2 with coding rate of 1/2.

Figure 6 introduces the adaptive stopping criterion which can reduce the computation after FEC threshold similar to the adaptive dictionary.

As the first stopping criterion (st.c.1) the algorithm is stopped when $T_p > 1$ or $R_p < \dfrac{10^{-SNR/200}}{2}$ is satisfied where for st.c.2 it will $T_p > 1$ or $R_p < \dfrac{10^{-SNR/200}}{0.04}$ and for st.c.3 $T_p > 1$ or $R_p < \dfrac{10^{-SNR/200}}{0.07}$.

It is important to mention that the bit errors do not occur due to the Doppler compensation algorithm, rather due to OMP algorithm. However, with FEC one does not need to lower the BER after given FEC threshold.

MISO-OFDM SYSTEM

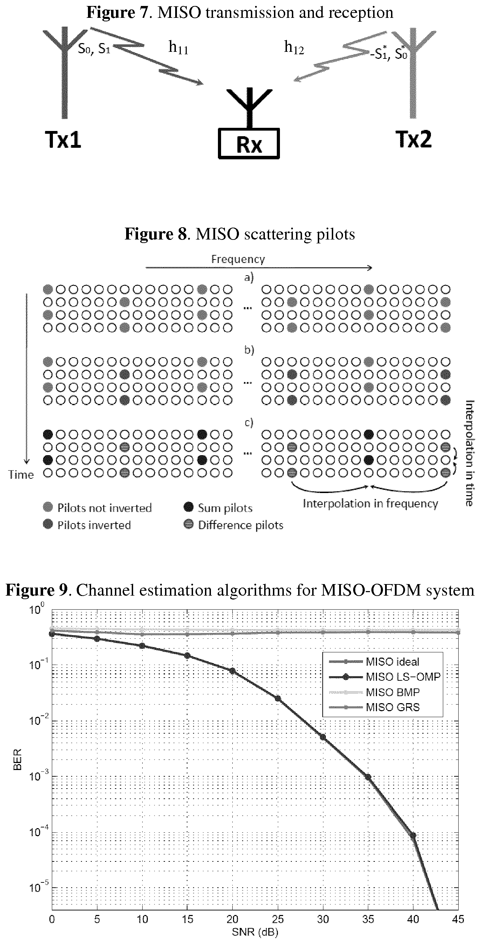

Figure 7 shows a MISO transmission system using multiple transmitters and one receiver, where the transmitted base data is the same in the transmitters but transmitted with slightly modified versions. In the receiver, *y* is the superimposition of them through different channels. The resulting diversity property improves the transmission.

The channel matrix for MISO can be written as

$$H_S(n) = (h_{11} \quad h_{12} \quad ... \quad h_{1N_t})  \qquad (20)$$

Here, $N_t$ is the number of the transmitters. Output $y$ for MISO can be written in a matrix form as

$$y(n) = H_{MS}(n) \cdot S(n) + w(n)  \qquad (21)$$

where $S(n)$ is the transmitted signal vector.

Figure 8 illustrates a diversity scheme of the system based on the Alamouti methodology(Digital Video Broadcasting (DVB); Implementation guidelines for a second generation digital terrestrial television broadcasting system (DVBT2),
Technical Specifications, ETSI TS 102 831 V1.2.1, 2012; Alamouti S. M., A simple transmit diversity technique for wireless communications, IEEE journal on selected areas in communications, 1998, 1,8).

The $Tx$1 and $Tx$2 are the transmitters which belong to MISO group 1 and group 2. Thus, the transmitter in MISO group 1 transmits the signals without buffering, negation and complex conjugation. However, the signals transmitted by MISO group 2 transmitter undergo pairwise modification; $Tx$2 transmits $-S_1{}^*$ while $Tx$1 transmits $S_0$, and $Tx$2 transmits $S_0{}^*$ while $Tx$1 transmits $S_1$. The cells $S_0$ and $S_1$ come from different Physical Layer Pipes (PLPs) and have no special relationship. In the receiver the signal components can be recovered accordingly where $y_1$ and $y_2$ at time $t$ and $t + T$ can be written as

$$y_1 = y(t) = h_{11}S_0 - h_{12}S_1{}^* + w_1$$

$$y_2 = y(t + T) = h_{11}S_1 + h_{12}S_0{}^* + w_2$$

where $h_{11}$ and $h_{12}$ are the channel transfer functions between $Tx$1 and $Rx$ and $Tx$2 and $Rx.$

After processing in the receiver, (21) can be written for MISO as

$$y = \begin{pmatrix} y_1 \\ y_2{}^* \end{pmatrix} = H_{MS} \cdot S + w  \qquad (22)$$

where

$$H_{MS} = \begin{pmatrix} h_{11} & -h_{12} \\ h_{12}{}^* & h_{11}{}^* \end{pmatrix}, S = \begin{pmatrix} S_0 \\ S_1{}^* \end{pmatrix}, w = \begin{pmatrix} w_1 \\ w_2^* \end{pmatrix}.$$

According to an embodiment of the invention, this problem may be solved by simple matrix HMS inversion which is based on Zero-Forcing (ZF) and can be written as

$$\hat{S} = H_{MS}^{-1} \cdot y  \qquad (23)$$

Using (23) data will be decoded back in the receiver as a result of the solution $\hat{S}$.

After $y$ has been reconstructed from the superimposed MISO signals, Doppler shifts and other channel effects can be compensated using the same methods as described in the single sender (SISO) case.

CHANNEL ESTIMATION

In the present embodiment, Alamouti-based MISO in frequency direction with two transmitters and a slightly modified version of the second transmitter's symbols is considered. The MISO processing and pilot modification for the signal from transmitters in MISO group 1 is unmodified. In contrast, the group 2 is modified in the reverse order in frequency for each pair of the constellation. Since some pilots are inverted in MISO group 2 signal, the pilots for the same position can be calculated using the sum (*sum*) and the difference (*diff*) pilots. This is done by interpolation both in time and in frequency direction. After calculating *sum* and the *diff* pilots for the same positions one can find values for the channel 1 as (*sum - diff*)/2 and for the channel 2 as (*sum + diff*)/2. Finally, one can estimate both channels. According to figure 8, the channel coherence time, i.e. the time in which the Doppler shift is assumed to be constant, needs to be longer due to the interpolation in time - between symbols. Similarly, the density of the pilots decreases twice in MISO in comparison to SISO. To achieve the same performance in the channel estimation, the number of the pilots should be increased twice.

If the channel matrix is unknown, it can be estimated using the methods described in connection with the single sender (SISO) case, using matching pursuit.

RESULTS FOR THE MISO-OFDM SYSTEM

The algorithms have been implemented in the DVB-T2 common simulations package (DVB-T2 CSP, DVB-T2: The Common Simulation Platform, BBC R&D White Paper 196, http://downloads.bbc.co.uk/rd/pubs/whp/whp-pdf-files/WHP196.pdf). The selected system parameters are MISO-OFDM with ⅛ guard interval, 8k mode, 256-QAM modulation and PP2 pilot symbols. Here, the synchronization and phase offset correction are assumed to be perfect; The carrier frequency and sampling interval are 862 MHz and $t_s = 7/64 \mu s$ respectively. As a channel Rayleigh MISO Channels have been adopted from Digital Video Broadcasting (DVB); Implementation guidelines for a second generation digital terrestrial television broadcasting system (DVBT2), Technical Specifications, ETSI TS 102 831 V1.2.1, 2012, cf. Tab. (1,2); The maximum Doppler shift is 200 Hz in the channel.

Figure 9 shows a comparison of different channel estimation algorithms, based on the bit error rate (BER). Here, we consider an overcomplete dictionary $D$ with elements of 1 $\mu s$ time delay and 1 Hz Doppler shift difference. The LS-OMP algorithm outperforms the GRS based OMP and BMP algorithms and comes very close to the ideal channel information curve with a part per thousand precision. The GRS based OMP algorithm had a random deviation due to the coefficient estimation sensitivity.

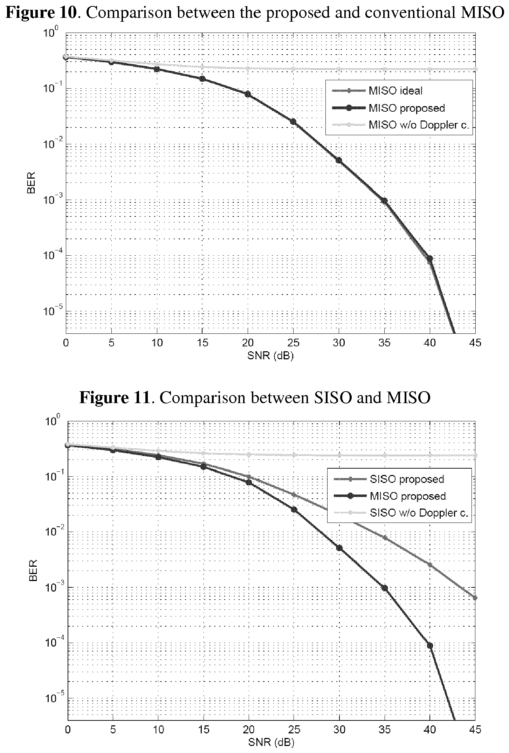

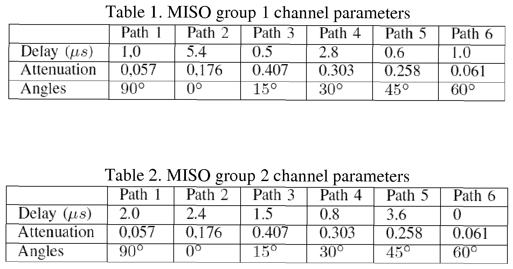

Figure 10 compares the system without Doppler compensation (conventional) to the system with the proposed algorithm to demonstrate the Doppler compensation algorithm. The difference is very small between the ideal and the proposed one which indicates that the channel estimation is very accurate. Here, LS-OMP is used as a channel estimation algorithm.

Figure 11 compares MISO and SISO using LS-OMP and the proposed Doppler compensation. Here, MISO is better than SISO which is evident that MISO benefits the diversity property.

The Doppler shift under different acceleration rates $a$. If the symbol duration $t_s$ is known one may calculate the Doppler shift difference between the beginning and the end of the symbol. First, the velocity difference $\Delta v$ between the beginning and the end of the symbol is calculated as $\Delta v = a \cdot t_s$ then the Doppler difference is calculated as $\Delta f_d = \Delta v \cdot f_0/c$. $\Delta f_d$ will be $49 m/s \cdot (7/64) \mu s \cdot 862 MHz/c = 15.4 \mu Hz$ for the Formula. One car, under heavy braking with the acceleration of 177 km/h$^2$. This shows that even in real high acceleration which corresponds to 177 km/s, the nonlinearity of the Doppler shift will be very small which is too far from making any negative effect on the compensation.

**Claims**

1. Method for compensating Doppler shifts, v, in a mobile communication system, comprising the steps of:

    - receiving a mobile communication signal, y;
    - transforming (140) the signal in order to compensate a Doppler shift, $v_p$, of at least one propagation path, p, of the signal y, wherein the Doppler shift $v_p$ is compensated based on an inverted channel matrix of the mobile communication system and wherein the channel matrix is estimated from the received signal using a matching pursuit, MP, algorithm; and
    - outputting the compensated signal;

    **characterized in that**
    the matching pursuit, MP, algorithm comprises the step of:

    - searching for a time delay in a dictionary, by keeping a Doppler shift constant.

2. The method of claim 1, wherein the matching pursuit, MP, algorithm further comprises the step of:

    - determining a Doppler shift, given the found delay.

3. Method according to claim 1, wherein a stopping criterion for the matching pursuit algorithm takes a distance between channel coefficients for different numbers of paths into account.

**4.** Method according to claim 3, wherein a stopping criterion for the matching pursuit algorithm further takes a signal-to-noise-ratio, SNR, into account.

**5.** Method according to claim 1, wherein the mobile communication signal is an OFDM signal.

**6.** OFDM receiver, adapted to carry out a method according to claim 1.

**Patentansprüche**

**1.** Verfahren zur Kompensation von Dopplerverschiebungen, v, in einem Mobilkommunikationssystem, umfassend die Schritte:

- Empfang eines Mobilfunksignals, y;
- Transformieren (140) des Signals, um eine Dopplerverschiebung, $v_p$, mindestens eines Ausbreitungsweges, p, des Signals, y, zu kompensieren, wobei die Dopplerverschiebung, $v_p$, basierend auf einer invertierten Kanalmatrix des mobilen Kommunikationssystems kompensiert wird und wobei die Kanalmatrix aus dem empfangenen Signal unter Verwendung eines Matching-Pursuit, MP, Algorithmus geschätzt wird; und
- Ausgabe des kompensierten Signals;

**dadurch gekennzeichnet, dass**
der Matching-Pursuit, MP, Algorithmus den Schritt umfasst:

- Suche nach einer Zeitverzögerung in einem Wörterbuch, indem eine Dopplerverschiebung konstant gehalten wird.

**2.** Verfahren nach Anspruch 1, wobei der Matching-Pursuit, MP, Algorithmus weiterhin den Schritt umfasst:

- Bestimmen einer Dopplerverschiebung, für die gefundene Verzögerung.

**3.** Verfahren nach Anspruch 1, wobei ein Stoppkriterium für den Matching-Pursuit Algorithmus einen Abstand zwischen Kanalkoeffizienten für unterschiedliche Anzahlen von Pfaden berücksichtigt.

**4.** Verfahren nach Anspruch 3, wobei ein Stoppkriterium für den Matching-Pursuit Algorithmus weiterhin ein Signal-Rausch-Verhältnis, SNR, berücksichtigt.

**5.** Verfahren nach Anspruch 1, wobei das Mobilfunksignal ein OFDM-Signal ist.

**6.** OFDM-Empfänger, geeignet zur Durchführung eines Verfahrens nach Anspruch 1.

**Revendications**

**1.** Procédé de compensation des décalages Doppler, v, dans un système de communication mobile, comprenant les étapes:

- réception d'un signal de communication mobile (y) ;
- transformation (140) du signal afin de compenser un décalage Doppler, $v_p$, d'au moins un trajet de propagation, p, du signal, y, dans lequel le décalage Doppler, $v_p$, est compensé sur la base d'une matrice de canaux inversée du système de communication mobile et dans lequel la matrice de canaux est estimée à partir du signal reçu en utilisant un algorithme de Matching Pursuit, MP; et
- sortie du signal compensé ;

**caractérisé en ce que**
l'algorithme de Matching Pursuit, MP, comprend l'étape :

- recherche d'un retard dans un dictionnaire, en maintenant un décalage Doppler constant.

2. Procédé selon la revendication 1, dans lequel l'algorithme de Matching Pursuit, MP, comprend en outre l'étape de :

- déterminer un décalage Doppler, étant donné le retard trouvé.

3. Procédé selon la revendication 1, dans lequel un critère d'arrêt pour l'algorithme de Matching Pursuit prend en compte une distance entre les coefficients de canal pour différents nombres de trajets.

4. Procédé selon la revendication 3, dans lequel un critère d'arrêt pour l'algorithme de poursuite de correspondance prend en outre en compte un rapport signal/bruit, SNR.

5. Procédé selon la revendication 1, dans lequel le signal de communication mobile est un signal OFDM.

6. Récepteur OFDM, adapté pour réaliser une méthode selon la revendication 1.

# Figure 1

**Figure 2**

## Figure 3

$(0\mu s,\underline{10\ \mu s},...,50\ \mu s)$

↓

$(\underline{1\mu s},\ 2\mu s,\ 3\mu s,\ ...,\ 9\mu s,10\ \mu s,11\mu s,...,\ 18\mu s,19\ \mu s)$

↓

$(0.1\mu s,\ ...,\ 0.9\mu s,\ 1.0\ \mu s,1.1\mu s,\underline{1.2\mu s},...,1.9\ \mu s)$

↓

$(1.11\mu s,\ ...,\ 1.19\mu s,\ 1.20\mu s,...,\ \underline{1.24\mu s},\ ...,1.29\ \mu s)$

↓

$(1.231\mu s,\ ...,\ 1.239\mu s,\ 1.240\mu s,\ 1.241\mu s,\ ...,\ \underline{1.245\mu s},...,1.249\mu s)$

↓

| Doppler Shift Search with τ=1.245 μs |

300

## Figure 4

## Figure 5

## Figure 6

**Figure 7**. MISO transmission and reception

**Figure 8**. MISO scattering pilots

**Figure 9**. Channel estimation algorithms for MISO-OFDM system

**Figure 10**. Comparison between the proposed and conventional MISO

**Figure 11**. Comparison between SISO and MISO

Table 1. MISO group 1 channel parameters

|  | Path 1 | Path 2 | Path 3 | Path 4 | Path 5 | Path 6 |
|---|---|---|---|---|---|---|
| Delay ($\mu s$) | 1,0 | 5.4 | 0.5 | 2.8 | 0.6 | 1.0 |
| Attenuation | 0,057 | 0,176 | 0.407 | 0.303 | 0.258 | 0.061 |
| Angles | 90° | 0° | 15° | 30° | 45° | 60° |

Table 2. MISO group 2 channel parameters

|  | Path 1 | Path 2 | Path 3 | Path 4 | Path 5 | Path 6 |
|---|---|---|---|---|---|---|
| Delay ($\mu s$) | 2.0 | 2.4 | 1.5 | 0.8 | 3.6 | 0 |
| Attenuation | 0,057 | 0,176 | 0.407 | 0.303 | 0.258 | 0.061 |
| Angles | 90° | 0° | 15° | 30° | 45° | 60° |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. NAKAMURA ; M. ITAMI.** Zero-forcing ICI canceller using iterative detection for mobile reception of OFDM. *ICCE,* 2014, vol. 2014, 153-154
- **Y.H. ZHANG ; W.-S. LU ; T.A. GULLIVER.** A Successive Intercarrier Interference Reduction Algorithm for OFDM Systems. *IEEE International Conference on Communications, ICC 2007.,* 2007, 2936-2941
- **W. HONGMEI ; C. XIANG ; Z. SHIDONG ; Y. YAN.** A low-complexity ICI cancellation scheme in frequency domain for OFDM in time-varying multipath channels. *PIMRC 2005.,* 2005, vol. 2, 1234-1237
- **T. HRYCAK ; S. DAS ; G. MATZ ; H.G. FEICHTINGER.** Low Complexity Equalization for Doubly Selective Channels Modeled by a Basis Expansion. *IEEE Transactions on Signal Processing,* 2010
- **MA ZIJI et al.** 2013 INTERNATIONAL SYMPOSIUM ON INTELLIGENT SIGNAL PROCESSING AND COMMUNICATION SYSTEMS. IEEE, 12 November 2013, 114-118
- **P. FEINSILVER.** Circulants, inversion of circulants, and some related matrix algebras. *Linear Algebra and Appl.,* 1984, vol. 56, 29-43
- **W. LI ; J. C. PREISIG.** Estimation of Rapidly Time-Varying Sparse Channels. *IEEE Journal of Oceanic Engineering,* 2007, vol. 32 (4), 927-939
- **ALAMOUTI S. M.** A simple transmit diversity technique for wireless communications. *IEEE journal on selected areas in communications,* 1998, vol. 1, 8